# EUROPEAN PATENT APPLICATION

(11) **EP 3 048 758 A1**
(43) Date of publication of application: **27.07.2016**
(21) Application number: 14843704.9
(22) Date of filing: 17.04.2014
(51) Int. Cl.: H04L 12/26

(54) **MANAGEMENT METHOD AND SYSTEM FOR DOMAIN NAME SYSTEM SERVER**

(30) Priority: 16.09.2013 CN 201310423242
(71) Applicant: ZTE Corporation, Guangdong Province 518057 (CN)
(72) Inventor: GU, Zhongyu, Shenzhen Guangdong Province 518057 (CN)
(74) Representative: Novagraaf Technologies
(86) International application number: PCT/CN2014/075635
(87) International publication number: WO 2015/035776

(57) **Abstract**

Provided are a method for managing a Domain Name System (DNS) server; the method comprises that: a DNS server class based on a Common Information Model (CIM) is defined; and a network management system configures and manages a DNS server by a CIM management application mechanism, wherein the DNS server implements the DNS server class.

## Description

### Technical Field

The present disclosure applies to the field of wireless communications, and in particular to a method and system for managing a Domain Name System (DNS) server.

### Background

The DNS is a necessary function in the networks, which comprises DNS client and DNS server. A method for resolving the domain name is that: when domain name information is detected, a computer system or a computer application program activates the DNS client to resolve the domain name information, and to check whether the corresponding domain name information is in locally cached domain name table items; if not, then the DNS client sends a resolution request to the DNS server, and after resolved, an IP address corresponding to the domain name information is returned to the DNS client by the DNS server; if the DNS server cannot resolve the domain name, then it forwards the resolution request to its superior DNS server. Because the DNS is very large, Hierarchical structure of the DNS server makes the DNS system very complex; if all the domain name entries to be saved in each network, then enormous resources will be consumed.

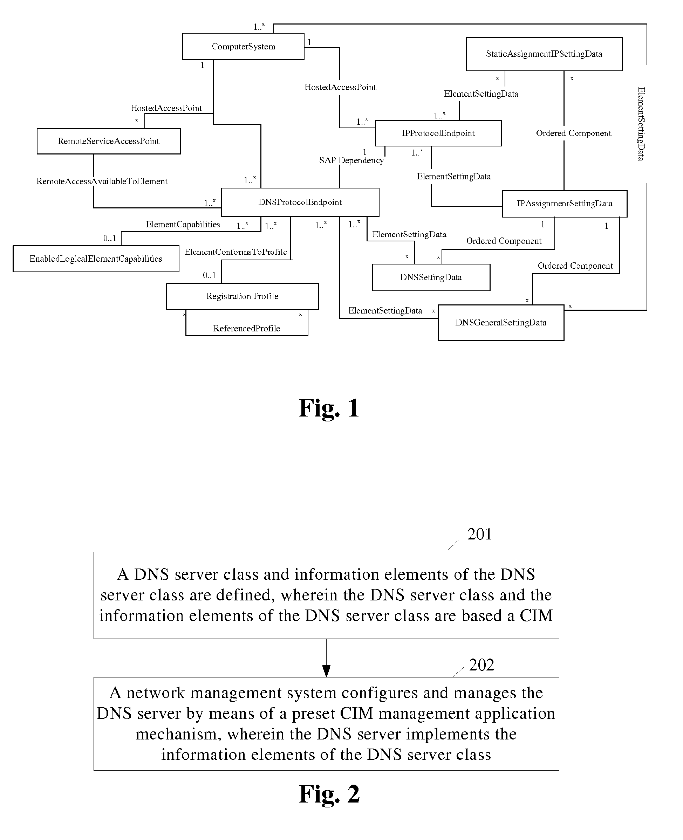

At present, the Distributed Management Task Force (DMTF) is doing standardization work on network management, and standardization work on the DNS client has completed. The DNS classes of the DNS client shown in Fig. 1 further comprise the DNS client class and the DNS server class, namely, DNS ProtoclEndpoint class and RemoteServiceAccessPoint class. And the DNS client class DNSProtocolEndPoint further comprises DNSSettingData class and DNSGeneralSettingData class, and so on.

Information elements involved in the DNS client class comprise: AppendParentSuffixes, AppendPrimarySuffixes, DomainName, Hostname, RegisterThisConnectionsAddress, UseSuffixWhenRegistering, DHCPOptionsToUse and DNSSuffixesToAppend.

Information elements of the DNS setting class comprise: AddressOrigin, DomainName, RegisterThisConnectionsAddress, RequestedHostname, UseSuffixWhenRegistering, DHCPOptionsToUse and DNSServerAddresses.

The management of the DNS client is implemented by defining the classes and the related information elements. For the detail of technologies, the specification document of the DMTF DSP1038-DNS Client Profile can be referenced.

However, the solution and standard for managing the DNS server are still missed in DMTF. Because deploying and configuring the DNS server are usually completed manually, it's in low efficiency; and with the automation management of devices and services, methods for supporting the automatic configuration and management of the DNS are also required.

### Summary

In view of this, a method and system for managing a DNS server is provided in the embodiment of the present disclosure, which can implement the unified and centralized management of the DNS server.

A method for managing a DNS server is provided, and the method comprises that: defining a DNS server class and information elements of the DNS server class, wherein the DNS server class and information elements of the DNS server class are based on a Common Information Model (CIM); and a network management system configuring and managing, by a CIM management application mechanism, a DNS server which implements the information elements of the DNS server class.

In an example solution, the information elements related to the DNS server class comprise: an address of the DNS server and policies for resolving an address of the DNS server.

In an example solution, the information elements of the DNS server class comprise: an address of the DNS server and policies for resolving an address of the DNS server.

In an example solution, the information elements of the DNS server class comprise: a function of a DNS service setting data class, a function of a DNS service capability class and information elements of a DNS service statistic class, wherein the DNS service setting data class and the DNS service capability class are associated with the DHCP server class.

In an example solution, the function of the DNS service capability class comprises, but is not limited to, a domain name address resolution function for IPv4 and IPv6; and
the information elements of the DNS service statistic class comprise at least one of followings: a total resolution entries, statistics of entries resolved locally, entries resolved by a superior server and a usage frequency of a domain name.

A system for managing a DNS server is further provided, and the system comprises: a network management system and the DNS server; wherein,
the network management system is configured to configure and manage, by a preset CIM management application mechanism, the DNS server which implements the information elements of the DNS server class; and
the DNS server which implement a function defined by the DNS server class based on the CIM, is configured and managed by the network management system.

In an example solution, the network management system comprises:
a setting element, configured to complete setting of related parameters of the DNS server, wherein the related parameters of the DNS server comprises information elements of the DNS server class, wherein the information elements of the DNS server class are based on the CIM; and
a managing element, configured to configure and manage by the CIM management application mechanism the DNS server which implements the DNS server class.

In an example solution, the DNS server comprises:
an executing element, configured to monitor a state of the DNS server, trigger an event notification, collect statistics information, and complete a main function of the DNS server; and
a communicating element, configured to perform communication with the network management system, wherein the communication is CIM/Hyper Text Transport Protocol (HTTP) based.

In an example solution, the setting element is configured to provide information elements related to the DNS server class, wherein the information elements related to the DNS server class comprise: an address of the DNS server and policies for resolving an address of the DNS server.

In an example solution, the information elements of the DNS server class comprise: the function of a DNS service setting data class, the function of a DNS service capability class and information elements of a DNS service statistic class, wherein the DNS service setting data class and the DNS service capability class are associated with the DHCP server class.

In an example solution, the function of the DNS service capability class comprises, but not limited to, a domain name address resolution function for IPv4 and IPv6; and
the information elements of the DNS service statistic class comprise at least one of followings: a total resolution entries, statistics of entries resolved locally, entries resolved by a superior server and a usage frequency of a domain name.

With the method and system for managing the DNS server, which are provided by the present disclosure, the DNS server provides information of the DNS server and related information of the DNS server, and the network management system performs access and configuration management to the DNS server by the address of the DNS server. Thus, the unified and centralized management of the DNS server can be implemented.

### Brief Description of the Drawings

Fig. 1 shows a diagram of DNS classes of a DNS client in the related art;
Fig. 2 shows a flowchart of a method for managing a DNS server according to an embodiment of the present disclosure;
Fig. 3 shows a structural diagram of a system for managing a DNS server according to an embodiment of the present disclosure; and
Fig. 4 is a schematic diagram of service class definition in the DNS server according to an embodiment of the present disclosure.

### Detailed Description of the Embodiments

The main idea of the present disclosure is that: a DNS server class and information elements of the DNS server class are defined, wherein the DNS server class and the information elements of the DNS server class are based on a CIM; and the network management system configures and manages the DNS server by a preset CIM management application mechanism, wherein the DNS implements the information elements of the DNS server class.

The present disclosure is further elaborated below in combination with the accompanying drawings and specific embodiments.

The flow of the method for managing a DNS server is provided by the embodiments of the present disclosure, as shown in Fig. 2, the flow comprises the following steps:
Step 201: the DNS server class and information elements of the DNS server class are defined, wherein the DNS server class and information elements of the DNS server class are based on the CIM; and
Step 202: the network management system configures and manages the DNS server by a preset CIM management application mechanism, wherein the DNS server implements the information elements of the DNS server class.

Wherein, the information elements related to the DNS server class comprise: the address of the DNS server and policies for resolving an address of the DNS server.

The DNS server class comprises: a DNS service setting data class, a DNS service capability class and a DNS service statistic class, wherein the DNS service setting data class and the DNS service capability class are associated with the DHCP server class.

Wherein, the information elements of the DNS service capability class (DNSServiceCapabilities) comprise, but not limited to, the domain name address resolution capability for the IPv4 and the IPv6.

The information elements of the DNS service endpoint statistic class (DNSServiceProtocolEndpointStatistics) comprise, but not limited to, the total resolution entries, the statistics of entries resolved locally, the entries resolved by the superior server and the usage frequency of the domain name.

In an optional example, the DNS server class comprises the state information of the DNS server;
the state information of the DNS server at least comprises that: the information indicating that the DNS server is enabled and runs normally, or the information indicating that the DNS server is enabled and is in a state without requirement for resolution, or the information indicating that the DNS server is in a failure state, and so on.

In an optional example, after Step 201 is completed, the method further comprises that: the DNS server class and the related information elements of the DNS server class, which are based on the CIM, are installed to one or more DNS servers; the one or more DNS servers are the servers which are about to implement functions of the DNS server.

Step 202 may further comprise that: during initialization, the DNS server communicates with the network management system via the HTTP and other communication protocols, and prompts network managers to input related configuration information, for example, the address of the DNS server; after initialization, the DNS server resolves a domain name resolution request of a DNS client.

In an optional example, the DNS server can report the state information of the DNS to the network management system or generate event notification information, wherein the event notification information is configured to report to the DNS server that an event which demands attention of the network managers occurs.

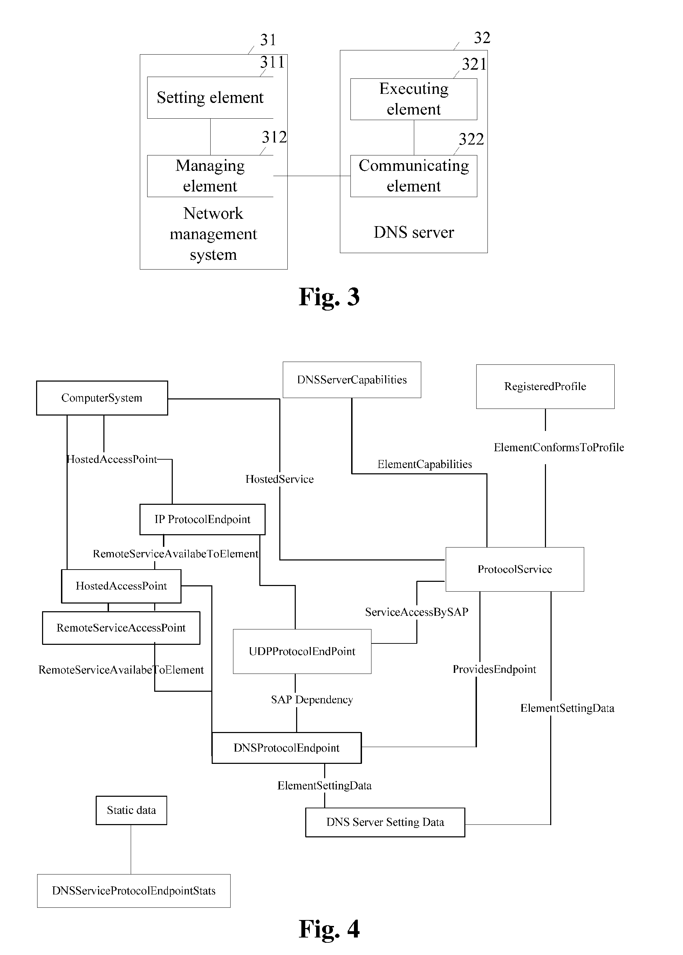

Fig. 3 shows a function diagram of an embodiment of the present disclosure; compared with a DNS service deployment structure in the related art, a functional entity of network management system is added, which implements management of the DNS server by the network management system by implementing the CIM mechanism. The management mechanism realizes the DNS server class by the DNS server.

Optionally, the management of the DNS server is implemented by a network management function. The system for managing a DNS server comprises: a network management system 31 and the DNS server 32; wherein,
the network management system 31 is configured to determine the information elements of the DNS server class, wherein the information elements of the DNS server class are based on the CIM, and configured and manage the DNS server 32 by the preset CIM management application mechanism, wherein the DNS server 32 implements the information elements of the DNS server class;
the DNS server 32 is configured to implement the information elements of the DNS server class, wherein the information elements of the DNS server class are based on the CIM, and is configured and managed by the network management system 31.

Wherein, the network management system 31 comprises: a setting element 311, which is configured to complete the setting of related parameters of the DNS server, which comprises that the information of the DNS server class and the related information elements of the DNS server class are defined, wherein the DNS class and the related elements of the DNS server class are based on the CIM; and
a managing element 312, which partially overlaps with the setting element 311 functionally, and is configured to configure and manage, by the CIM management application mechanism, the DNS server which implements the DNS server class.

Both the setting element 311 and the managing element 312 can be implemented by a Central Processing Unit (CPU) or a Digital Signal Processor (DSP) and other hardware chips which are in the network management system.

The DNS server 32 comprises: an executing element 321, which is configured to monitor the state of the DNS server, trigger the event notification, collect the statistics information, and complete the main function of the DNS server; and
a communicating element 322, which is configured to perform communication with the network management system, wherein the communication is CIM/HTTP based.

The setting element 323 is configured to provide the information elements related to the DNS server class, wherein the information elements related to the DNS server class comprise: the address of the DNS server and policies for resolving an address of the DNS server.

Both the executing element and the setting element can be implemented by a CPU or a DSP and other hardware chips which are in the server; the communicating element can be implemented by a CPU or a General Purpose Input/Output (GPIO) and other hardware chips which are in the server.

The DNS server classes comprise: a DNS service setting data class, a DNS service capability class and a DNS service statistic class, wherein the DNS service setting data class and the DNS service capability class are associated with the DHCP server class.

Fig. 4 shows a schematic diagram of definition of the DNS server class, wherein the DNS server class comprises a core class DNSService of the DNS service, which can also be marked by DHCPServer; the only difference is the name, and the substance of the present disclosure is not influenced. Other related classes also comprise: DNSServiceSettingData, DNSServiceCapability, DNSServiceStatistic, and so on, which are used for defining related parameters and setting of the DNS service and making statistics of usage of the related domain name.

Wherein, the information elements of the DNS service setting data class comprises, but is not limited to, the domain name address resolution for the IPv4 and the I Pv6.

The information elements of DNSServiceProtocolEndpointStatistics comprises, but is not limited to, the total resolution entries, the statistics of entries resolved locally, the entries resolved by the superior server and the usage frequency of the domain name.

The above is only the preferred embodiment of the present disclosure and not intended to limit the scope of protection of the present disclosure.

## Claims

1. A method for managing a Domain Name System, DNS, server, comprising:
defining a DNS server class and information elements of the DNS server class, wherein the DNS server class and information elements of the DNS server class are based on a Common Information Model, CIM; and
a network management system configuring and managing, by a CIM management application mechanism, a DNS server which implements the information elements of the DNS server class.

2. The method as claimed in claim 1, wherein the information elements of the DNS server class comprise: an address of the DNS server and policies for resolving an address of the DNS server.

3. The method as claimed in claim 1, wherein the information elements of the DNS server class comprise: a function of a DNS service setting data class, a function of a DNS service capability class and information elements of a DNS service statistic class, wherein the DNS service setting data class and the DNS service capability class are associated with the DHCP server class.

4. The method as claimed in claim 3, wherein the function of the DNS service capability class comprises, but is not limited to, a domain name address resolution function for IPv4 and IPv6; and
the information elements of the DNS service statistic class comprise at least one of followings: a total resolution entries, statistics of entries resolved locally, entries resolved by a superior server and a usage frequency of a domain name.

5. A system for managing a Domain Name System, DNS, server, comprising: a network management system and the DNS server; wherein,
the network management system is configured to configure and manage, by a preset Common Information Model, CIM, management application mechanism, the DNS server which implements information elements of a DNS server class; and
the DNS server which implement a function defined by the DNS server class based on a CIM, is configured and managed by the network management system.

6. The system as claimed in claim 5, wherein the network management system comprises:
a setting element, configured to complete setting of related parameters of the DNS server, wherein the related parameters of the DNS server comprise information elements of the DNS server class, wherein the information elements of the DNS server class are defined based on the CIM; and
a managing element, configured to configure and manage, by the CIM management application mechanism, the DNS server which implements the DNS server class.

7. The system as claimed in claim 6, wherein the DNS server comprises:
an executing element, configured to monitor a state of the DNS server, trigger an event notification, collect statistics information, and complete a main function of the DNS server; and
a communicating element, configured to perform communication with the network management system, wherein the communication is CIM/Hyper Text Transport Protocol, HTTP, based.

8. The system as claimed in claim 6, wherein,
the setting element is configured to provide information elements related to the DNS server class, wherein the information elements related to the DNS server class comprise: an address of the DNS server and policies for resolving an address of the DNS server.

9. The system as claimed in claim 8, wherein the information elements of the DNS server class comprise: a function of a DNS service setting data class, a function of a DNS service capability class and information elements of a DNS service statistic class, wherein the DNS service setting data class and the DNS service capability class are associated with the DHCP server class.

10. The system as claimed in claim 9, wherein,
the function of the DNS service capability class comprises, but not limited to, a domain name address resolution function for IPv4 and IPv6; and
the information elements of the DNS service statistic class comprise at least one of followings: a total resolution entries, statistics of entries resolved locally, entries resolved by a superior server and a usage frequency of a domain name.
